# EUROPEAN PATENT APPLICATION

(11) **EP 1 672 230 A1**
(43) Date of publication of application: **21.06.2006**
(21) Application number: 05102504.7
(22) Date of filing: 30.03.2005
(51) Int. Cl.: F16C 19/18, F16C 33/58, F16C 35/067

(54) **A bearing unit for the hub of a motor vehicle wheel**

(30) Priority: 14.12.2004 IT TO20040875
(71) Applicant: Aktiebolaget SKF, 415 50 Göteborg (SE)
(72) Inventor: Vignotto, Angelo, 10134 Torino (IT); Savarese, Claudio, 10060 Airasca (TO) (IT)
(74) Representative: Fioravanti, Corrado

(57) **Abstract**

The bearing unit (10) has an outer race (20) made of metal sheet and forming internally two outer raceways (22, 23). The outer race (20) further forms two tubular side portions (24, 25) with cylindrical outer surfaces (24a, 25a) and a central portion (26) near the raceways (22, 23). The central portion (26) has an outer surface (27) radially recessed with respect to the side outer cylindrical surfaces (24a, 25a).

## Description

The present invention refers to a bearing unit for the hub of a motor vehicle wheel.

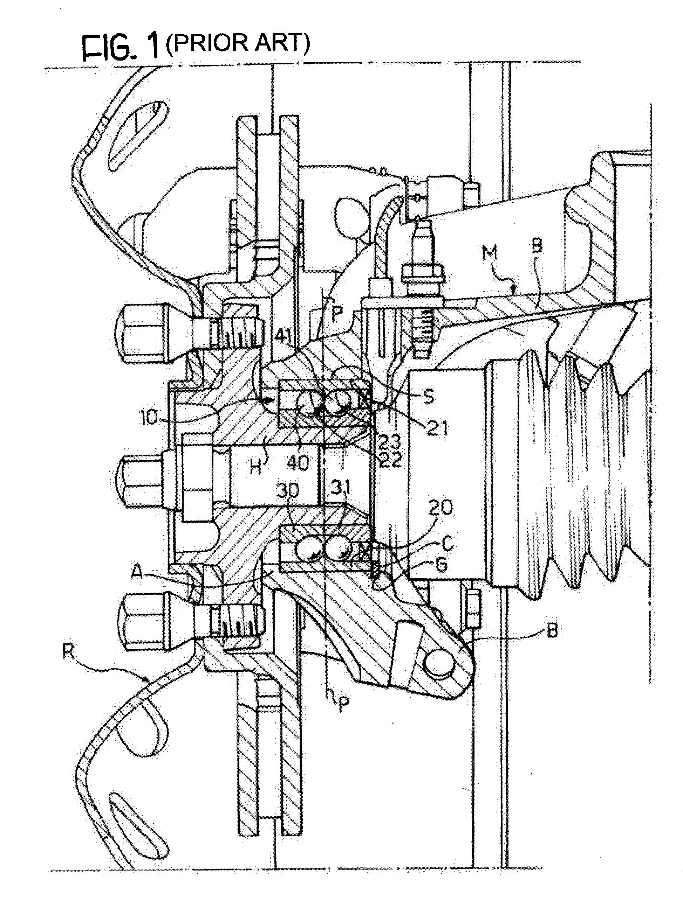

For a better understanding of the state of the art and problems related thereto, there will be at first described a rolling bearing unit of conventional design, reference being made to figure 1 of the appended drawings. A bearing unit 10 for the hub H of the wheel R of a motor vehicle is mounted in a cylindrical seat S of a suspension standard M. The bearing unit is of the so-called "angular contact" type and comprises a radially outer race 20, two inner races 30, 31, and two sets of balls 40, 41 radially interposed between the outer race and the inner races. The outer race 20 has a radially outer cylindrical surface 21 fixed with radial interference in the seat S of the suspension standard and a radially inner surface in which there are formed, near a central radial plane P, two radially outer raceways 22, 23 for the sets of balls 40, 41, respectively.

Heretofore, with most applications the suspension standard forms a shoulder A projecting radially inwardly at the outboard (or axially outer) side of the seat S. One of the two sides of the outer race 20 abuts against this shoulder, whereas axial movement of the bearing is limited, at the opposite side, by a circlip C inserted in a groove G formed in the inboard (or axially inner) side of the suspension standard.

As schematically shown in figure 1, the contact pressure between the seat S of the suspension standard and the outer race 20 of the bearing is mainly concentrated in the central or mid portion of the outer surface of the race 20. This is due both to the loads transmitted in use from the suspension standard to the bearing, and, especially, to the greater thickness (and therefore greater rigidity) of the race 20 in its central part. Owing to this central concentration of stresses and the axial play with which the outer race is locked in the seat S between the shoulder A and the circlip C, the bearing may be subjected to undesired axial movements. Further, it has been noted that the seat S of the standard tends to become slightly oval as a result of loads transmitted to the seat S from the several brackets B of the standard, which are oriented radially asymmetrically along the circumference of the seat S.

The foregoing leads to an undesired ovalization of the raceways 22, 23 which are formed close to the aforesaid central zone of the outer race.

It is an object of the present invention to provide an improved bearing unit capable of overcoming the above mentioned drawbacks.

In particular it is desired to prevent the raceways of the outer race from becoming oval, ensure a steady axial locking of the bearing unit in the suspension standard, and reduce manufacturing and assembling costs of the bearing unit and the standards.

These and other objects, that will be better understood herein after, are accomplished according to the present invention by a bearing having the features defined in the appended claims.

The characteristics and advantages of the invention will become apparent from the ensuing detailed description of a few preferred but not limiting embodiment of the invention, reference being made to the accompanying drawings, in which:
- figure 1 is a partial axial cross-sectional view of a wheel assembly with a bearing unit of conventional design;
- figure 2 is a partial axial cross-sectional view of a first embodiment of a bearing unit according to the invention;
- figure 3 is an axial cross-sectional view of the outer race of the bearing unit of figure 2;
- figure 4 is a partial axial cross-sectional view of a second embodiment of a bearing unit according to the invention;
- figure 4A is a cross-sectional view, to an enlarged scale, of a detail indicated A in figure 4;
- figure 4B is a view from above of the detail of figure 4A, as viewed according to the arrow B of figure 4;
- figure 5 is a side view according to arrow V of figure 4; and
- figures 6 and 7 are partial, axial cross-sectional views of third and forth embodiments of a bearing unit according to the invention, mounted in a suspension standard of a motor vehicle.

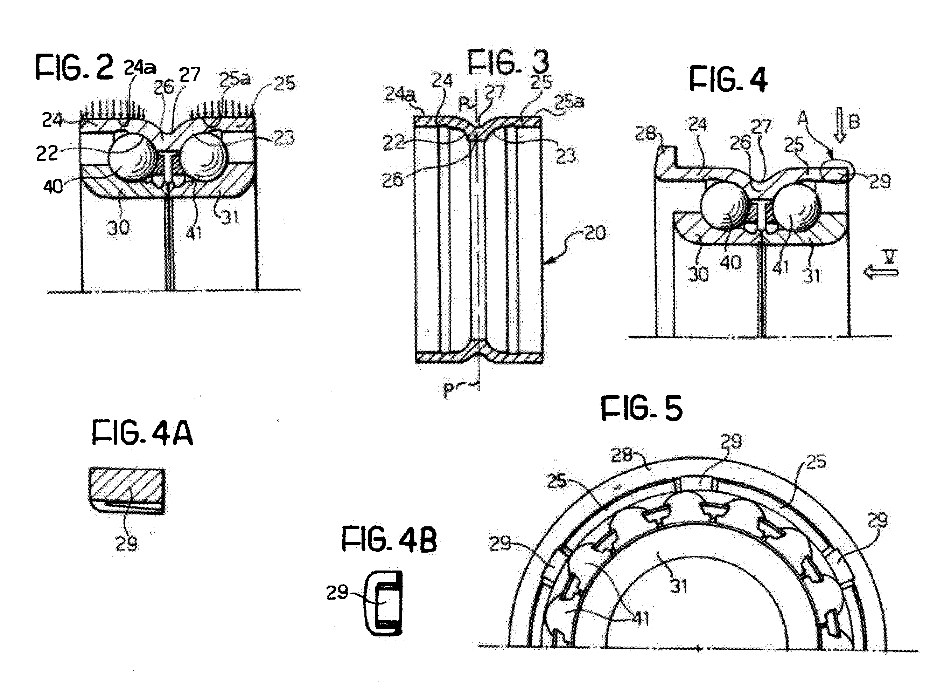

With reference initially to figures 2 and 3, a bearing unit 10 comprises a radially outer race 20 which, in accordance with the present invention, is made starting from a metal sheet element and has a substantially uniform radial thickness.

The race 20 (shown separately in figure 3) has two side cylindrical tubular portions 24, 25 with outer cylindrical surfaces 24a, 25a, and a central portion 26 with an outer surface 27 radially recessed with respect to the cylindrical surfaces 24a, 25a. In the illustrated example, the central portion 26 has a substantially V-shaped axial cross section with a radial outer groove 27 formed in a radial plane P axially intermediate two outer raceways 22, 23 for two respective sets of balls 40, 41. The balls are radially interposed between the outer race 20 and two respective radially inner raceways formed by two radially inner races 30, 31 located side to side in the axial direction.

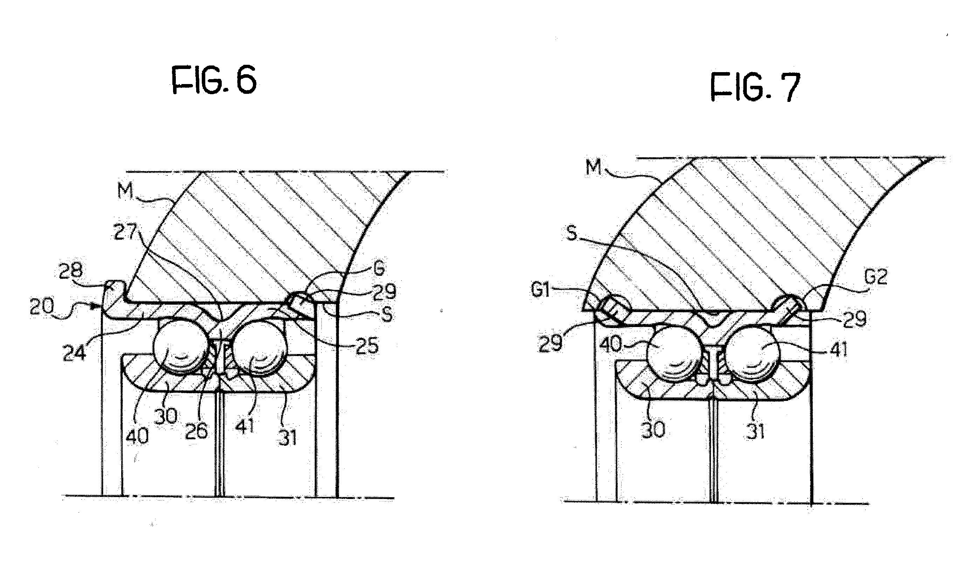

The central recessed surface 27 has an axial extension so as to embrace zones radially aligned with the outer raceways 22, 23. When the outer race 20 is inserted in a cylindrical seat S of a standard M (figures 6 and 7) there is no appreciable contact between the seat S and the recessed outer surface 27 of the race 20. Contact with the seat S is confined to the cylindrical side surfaces 24a, 25a.

Owing to this arrangement, loads transmitted in use from the seat S to the outer race 20 are divided and distributed along the outer cylindrical surfaces 24a and 25a, as indicated schematically in figure 2. Therefore, possible roundness defects of the seat S and ovals caused by the loads coming from the suspension are transmitted only to the side portions 24 and 25 of the outer race and not to its central part, without noticeably affecting the raceways 22, 23. Furthermore, the two axially spaced contact surfaces 24a, 25a interact with the cylindrical seat S contrasting axial movement of the outer race 20 (and therefore of the whole bearing unit 10) with respect to the standard.

In addition, elasticity of the metal sheet allows the outer race 20 to adapt itself to the aforesaid ovals and roundness defects of the standard seat S. It is so possible to increase the admissible dimensional tolerances of the outer race 20. By way of indication, the radial thickness of the outer race 20 may have a tolerance of ± 0.5 mm.

The invention offers also other important advantages as compared to conventional bearings discussed with reference to figure 1.

As known to those skilled in the art, conventional outer races are manufactured starting from forged annular blanks obtained cutting full bars and forming a central bore. The annular blank is then turned and deformed to reach the desired final shape and lastly subjected to a final grinding step. The outer races according to the present invention, can be formed by drawing, starting from a flat metal sheet strip, or by rolling, starting from annular elements cut from a base metal sheet tube. In either case, through a single forming step (drawing or rolling), a ring is obtained having the final cross-section shown in figure 3, requiring only a final polishing or grinding step on the raceways. The turning step, with relevant working time and costs, is eliminated. Additionally, no material is wasted for turning away the so-called removable stock. Further, in the absence of a turning step, the final form imparted to the race 20 according to the invention during its forming step is attained without cutting the race. This allows for a better exploitation of the structural strength of the metal constituting the race.

The race 20 can be made of a stainless metal sheet. It is also possible to make use of metal sheets treated with anti-corrosion processes. With conventional races of the above-discussed type, beneficial effects of a possible anti-corrosion process would be nullified due to the heating that precedes the forming step.

Still in accordance with the invention, it is possible to improve the assembling of the bearing in the suspension standard.

As shown in the embodiment of figures 4 and 5, at the axially outer side of the race 20 it is easy to form a flange or tabs 28 radially projecting outwardly so as to constitute a radial surface adapted for axially abutting against an outer side of the standard. This allows to simplify the manufacturing of the standard, eliminating the conventional edge A (figure 1) that projects radially inwardly. It is also possible to form flexible tabs 29 radially outwardly projecting from one or both sides of the race 20. These tabs, by snapping into a groove G which is easy to obtain at one or both the axial ends of the cylindrical seat S, lock the outer race axially within the standard and take up the axial play, heretofore inevitable with a conventional circlip (that is advantageously eliminated).

Figure 6 illustrates schematically a third embodiment of the invention, where flexible tabs 29 are provided at both the axial ends of the race 20. The tabs 29 snap into two respective grooves G1, G2 formed in the seat of a suspension standard M.

In accordance with the embodiment schematically shown in figure 7, the tabs 29 have tips directed towards the centre of the bearing, instead of outwardly.

The invention is not intended to be limited to the embodiments described and illustrated herein, which should be considered as examples of an embodiment of the bearing. Rather, the invention may be modified with regard to the shape, size and arrangement of parts, and to constructional and functional details. For example, the central portion 26 of the outer race 20 may have a cross section of a shape different from the V-shape shown in the drawings, provided that it has a cylindrical outer surface radially recessed in order to attain the above mentioned advantages.

## Claims

1. A bearing unit (10) for the hub of a motor vehicle wheel, comprising a radially outer race (20) having
a radially outer surface adapted for mounting in a cylindrical seat (S) of a suspension standard (M) of a motor vehicle and
a radially inner surface forming two outer raceways (22, 23) for two respective sets of rolling elements (40, 41) radially interposed between the outer race (20) and two respective radially inner raceways formed by one or two radially inner races (30, 31),
**characterised in that** the outer race (20) is made of metal sheet and forms
two tubular side portions (24, 25) with cylindrical outer surfaces (24a, 25a) having a given outer diameter, and
a central portion (26), near the raceways (22, 23), having an outer surface (27) radially recessed with respect to said outer cylindrical surfaces (24a, 25a).

2. A bearing unit according to claim 1, **characterised in that** the recessed outer surface (27) is formed at a position radially aligned with respect to the outer raceways (22, 23).

3. A bearing unit according to any one of the preceding claims, **characterised in that** the central portion (26) has a substantially V-shaped axial cross-section.

4. A bearing unit according to any one of the preceding claims, **characterised in that** the radially recessed outer surface (27) comprises a groove formed in a radial plane (P) axially intermediate the two outer raceways (22, 23).

5. A bearing unit according to claim 1, **characterised in that** the outer race of metal sheet (20) has a substantially uniform radial thickness.

6. A bearing unit according to any one of the preceding claims, **characterised in that** the outer race (20) forms a surface (28) radially outwardly projecting from an axial end portion of the outer race (20) for axially abutting against an outer side of a suspension standard (M) of a motor vehicle.

7. A bearing unit according to any one of the preceding claims, **characterised in that** the outer race (20) forms a plurality of flexible tabs (29), radially outwardly projecting from one or both the axial the axial end portions of the outer race (20), for snapping into one (G) or two (G1, G2) grooves formed at one or both the axial end portions of the cylindrical seat (S) of a suspension standard (M) of a motor vehicle.

8. A bearing unit according to any one of the preceding claims, **characterised in that** the outer race (20), is made of a stainless metal sheet.

9. A bearing unit according to any one of the preceding claims, **characterised in that** the outer race (20), is made of a metal sheet subjected to anti-corrosion process.

10. A bearing unit according to any one of the preceding claims, **characterised in that** the bearing unit is an angular contact ball bearing unit.
